# EUROPÄISCHE PATENTANMELDUNG

(11) **EP 1 897 765 A1**
(43) Veröffentlichungstag der Anmeldung: **12.03.2008**
(21) Anmeldenummer: 07016890.1
(22) Anmeldetag: 29.08.2007
(51) Int. Cl.: B60R 21/34

(54) **Kraftfahrzeug**

(30) Priorität: 07.09.2006 DE 102006042485
(71) Anmelder: AUDI AG, 85045 Ingolstadt (DE)
(72) Erfinder: Kugler, Peter, 86609 Donauwörth (DE); Pfaller, Bernhard-Konrad, 85095 Denkendorf (DE); Clarke, Matthew, 85057 Ingolstadt (DE); Dorfner, Wolfgang, 85049 Ingolstadt (DE)
(74) Vertreter: Engelhardt, Harald

(57) **Zusammenfassung**

Bei einem Kraftfahrzeug mit einer Frontklappe und einer Vorrichtung, durch welche die Frontklappe bei einer drohenden oder erfolgten Kollision mit einem Fußgänger oder Zweiradfahrer angehoben wird, wird durch die Vorrichtung die Frontklappe zusätzlich entgegen der Fahrtrichtung bewegt, derart, dass die Vorderkante der Frontklappe in ihrer Schutzposition eine gegenüber der Ausgangslage zurückgesetzte Stellung einnimmt. Dadurch kann beim Aufprall des Fahrzeuges auf ein anderes Fahrzeug oder ein Hindernis bis zu einer vorbestimmten Geschwindigkeit eine Beschädigung der Frontklappe vermieden werden.

## Beschreibung

Die Erfindung bezieht sich auf ein Kraftfahrzeug mit einer Frontklappe gemäß dem Oberbegriff des Patentanspruchs 1.

Gattungsgemäße Vorrichtungen sind in vielfältigen Varianten bekannt. Sie umfassen einen oder mehrere Sensoren sowie eine Mechanik zum Anheben der Frontklappe. Bei den Sensoren kann es sich um sogenannte Pre-Crash-Sensoren, welche einen bevorstehenden Aufprall detektieren, handeln oder um Sensoren, welche bspw. im Stoßfänger angeordnet sind und auf Stoßbelastungen reagieren, wie sie bei einem Aufprall eines Fußgängers vorkommen.

Auch für die Mechanik zum Anheben der Frontklappe gibt es verschiedene Wirkprinzipien. Unabhängig von der jeweiligen Kinematik und den dafür erforderlichen Bauteilen (Scharniere, Airbag usw) kann die Krafterzeugung durch eine Pyrotechnik, eine Hydraulik oder durch pneumatische Einrichtungen erfolgen. Entscheidend ist, dass sich die Frontklappe vor dem Aufschlagen einer Person in ihrer angehobenen Schutzstellung befindet und in dieser Stellung gehalten wird. Dadurch ist sichergestellt, dass ein größerer Verformungsweg zur Verfügung steht.

Der Erfindung liegt die Aufgabe zugrunde, bei einem gattungsgemäßen Kraftfahrzeug mit einer Schutzvorrichtung für Fußgänger und Zweiradfahrer außerdem sicher zu stellen, dass bei einem Aufprall des Fahrzeugs auf ein anderes Fahrzeug oder ein Hindernis bis zu einer bestimmten Aufprallgeschwindigkeit die Frontklappe nicht beschädigt wird.

Die Aufgabe wird dadurch gelöst, dass ausgelöst über einen Precrashsensor und/oder einen Sensor im Stoßfängerbereich die Frontklappe über den Aktuator entgegen der Fahrtrichtung bewegt wird, derart, dass die Vorderkante der Frontklappe eine gegenüber der Ausgangslage zurückgesetzte Stellung einnimmt. Der Kern der Erfindung besteht demnach darin, dass eine vorhandene Fußgängerschutzvorrichtung auch dazu verwendet wird, um bei einem Aufprall des Fahrzeugs auf ein Hindernis bis zu einer vorgegebenen Geschwindigkeit die Beschädigung der Frontklappe zu vermeiden.

Durch die erfindungsgemäße Einrichtung wird die Frontklappe neben ihrer Anhebung zusätzlich auch entgegen der Fahrtrichtung bewegt, wodurch sie aus demjenigen Bereich gelangt, der bei geringeren Aufprallgeschwindigkeiten verformt werden kann. Der Nutzen der Einrichtung erstreckt sich damit auf einen Fall, der in der Praxis wesentlich häufiger als die Kollision mit einem Fußgänger oder Zweiradfahrer auftritt.

Aus der EP 0 630 801 A1 ist es zwar bekannt, durch einen Hebelmechanismus bei einem Aufprall eines Fußgängers die Frontklappe nicht nur anzuheben, sondern auch entgegen der Fahrtrichtung zu verlagern. Diese Verlagerung tritt jedoch nur ein, wenn eine Kraft von vorne auf die Frontklappe einwirkt. Das ist zwar bei einem Fußgängeraufprall, bei dem die Frontklappe ohnehin beschädigt wird, ein Mittel, um das Verletzungsrisiko des Fußgängers zu reduzieren. Die bekannte Einrichtung ist jedoch nicht geeignet, die Beschädigung der Frontklappe bei einem kleinern Aufprall des Fahrzeuges auf ein Hindernis auszuschließen. Gemäß der vorliegenden Erfindung kommt durch eine aktive Verlagerung der Frontklappe nach hinten deren vorderer Randbereich hingegen nicht in Berührung mit dem Hindernis.

Der diese Bewegung einleitende Aktuator wird durch Sensoren angesteuert die auslösen, bevor eine Berührung mit der Frontklappe stattfindet.

Die Sensoren und ihre Anbringungsstellen können entsprechend ihren Aufgaben, d. h. die Erfassung eines Fußgängeraufpralls oder die Kollision mit einem Hindernis, optimiert werden. Gleichwohl ist es in vielen Fällen ausreichend und vorteilhaft, wenn ein einziger Sensor im Stoßfängerbereich das Signal für beide Auslösearten liefert.

Besonders zweckmäßig ist natürlich, wenn die Fußgängerschutzeinrichtung und darüber auch die Einrichtung zur Verhinderung der Beschädigung der Frontklappe, reversibel ausgebildet sind. Beispiele für solche Vorrichtungen sind in der Schutzrechtsliteratur hinreichend beschrieben. Insbesondere sind darunter Vorrichtungen zu verstehen, die mit einer Mechanik oder Hydraulik arbeiten und keinen Airbag einsetzen. Wenn die Vorrichtungen nicht voll reversibel sind, dann sollte zumindest darauf geachtet werden, dass ein Austausch beschädigter Teile schnell und kostengünstig möglich ist.

Gemäß einer vorteilhaften Ausgestaltung der Erfindung kann die Frontklappe über zwei in ihrem vorderen Bereich angreifende Bügel an karosseriefesten Lagerstellen gelagert sein und durch Verschwenken der Bügel in ihre Schutzposition gelangen. Durch die Bügel lässt sich durch eine einfache Schwenkbewegung sowohl die Frontklappe anheben, als auch eine Bewegung der Frontklappe entgegen der Fahrtrichtung erreichen. Die Verlagerung der Frontklappe nach hinten entspricht dabei in etwa der Bügellänge, also dem Abstand zwischen dem karosseriefesten Drehpunkt und der Lagerstelle an der Frontklappe.

Im Rahmen der Erfindung sind viele Ausgestaltungen und Abwandlungen möglich, ohne den Kern der Erfindung, nämlich neben dem Fußgängerschutz bei sonstigen Frontkollisionen die Frontklappe vor Beschädigungen zu bewahren, zu verlassen.

## Patentansprüche

1. Kraftfahrzeug mit einer Frontklappe, welche durch einen Aktuator in eine angehobene Schutzstellung für Fußgänger und Zweiradfahrer bewegbar ist, **dadurch gekennzeichnet, dass** ausgelöst über einen Precrashsensor und/oder einen Sensor im Stoßfängerbereich die Frontklappe über den Aktuator entgegen der Fahrtrichtung bewegt wird, derart, dass die Vorderkante der Frontklappe eine gegenüber der Ausgangslage zurückgesetzte Stellung einnimmt.

2. Kraftfahrzeug nach Anspruch 1, **dadurch gekennzeichnet, dass** die Frontklappe über zwei in ihrem vorderen Bereich angreifende Bügel an karosseriefesten Lagerstellen gelagert ist und durch Verschwenken der Bügel in ihre zurück verlagerte Stellung gelangt.
